# EUROPÄISCHE PATENTSCHRIFT

(11) **EP 3 222 134 B1**
(45) Veröffentlichungstag und Bekanntmachung des Hinweises auf die Patenterteilung: **19.08.2020**
(21) Anmeldenummer: 17161372.2
(22) Anmeldetag: 16.03.2017
(51) Int. Cl.: A01F 15/18

(54) **RUNDBALLENPRESSE UND VERFAHREN**
ROUND BALER AND METHOD
ROTO-PRESSE ET PROCÉDÉ

(30) Priorität: 17.03.2016 DE 102016204481
(43) Veröffentlichungstag der Anmeldung: 27.09.2017
(73) Patentinhaber: Deere & Company, Moline, IL 61265 (US)
(72) Erfinder: Stivala, Marc, 70190 RIOZ (FR); Menetrier, Michel, 70100 Beaujeu (FR)
(74) Vertreter: Reichert, Christian

(56) Entgegenhaltungen:
- EP-A1- 1 308 078
- DE-T2- 69 308 059
- US-A- 4 155 298
- US-A- 5 913 805

## Beschreibung

Die vorliegende Erfindung betrifft eine Rundballenpresse, insbesondere landwirtschaftliche Rundballenpresse zur Bildung rundzylindrischer Ballen, mit einem Pressmittel in der Art eines endlosen Pressmittels, insbesondere eines Pressriemens oder -gurts und einer Abstreifereinrichtung zur Verminderung von Anhaftungen an einem mit einem Ballen zusammenwirkenden Pressmittel, wobei die Abstreifereinrichtung einen eine Kratzleiste tragenden Kratzleistenträger umfasst, wobei der Kratzleistenträger mit der Rundballenpresse verschwenkbar verbunden ist. Mit dem Kratzleistenträger ist zumindest eine erste Stellung, in der die Kratzleiste wirksam an dem Pressmittel angrenzt, und eine zweite Stellung einnehmbar, in der die Kratzleiste von dem Pressmittel abgehoben ist. Die Kratzleiste nimmt die zweite, abgehobene Stellung zyklisch ein und der Zyklus wird von einem Spannmechanismus für das Pressmittel bestimmt, wobei der Spannmechanismus wenigstens einen, vorzugsweise direkt oder indirekt verschwenk- bzw. verdrehbar mit der Rundballenpresse verbundenen und insbesondere mit einem Spannelement zusammenwirkenden Spannarm aufweist. Der Spannarm ist mit dem Kratzleistenträger derart wirksam verbunden, dass der Kratzleistenträger der Bewegung des Spannarms zumindest bereichsweise folgt. Ferner betrifft die vorliegende Erfindung ein Verfahren zum Betrieb einer Rundballenpresse.

Bekannte Abstreifereinrichtungen werden häufig an Pressen eingesetzt, welche bewegliche Teile aufweisen, die mit durch die Pressen zu verarbeitendem Pressgut in Berührung kommen. Die Abstreifereinrichtungen weisen Kratzleisten auf, die mit den beweglichen Teilen der Presse zusammenwirken, um Anhaftungen von Pressgut und anderem Material, wie Schmutz, Erde, Pressgutresten etc. entgegenzuwirken, solchen vorzubeugen oder bereits bestehende Anhaftungen oder Ablagerungen zu entfernen. Bei den beweglichen Teilen handelt es sich häufig um Pressmittel in der Art von Gurten bzw. Riemen. Es sind aber auch Abstreifereinrichtungen bekannt, die entsprechend mit Rollen oder Walzen einer Presse zusammenwirken.

Derartige Pressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen.

Es sind Abstreifereinrichtungen für Pressmittel in der Art von Gurten bzw. Riemen bekannt, die einen eine Kratzleiste tragenden Kratzleistenträger aufweisen, der beweglich an einer Presse angebracht ist.

So offenbart die US 5 913 805 A eine Rundballenpresse mit einem Hauptrahmen, einer Heckklappe, die schwenkbar mit dem Hauptrahmen verbunden ist, und eine Schürze, die sich um eine Vielzahl von Führungsrollen erstreckt, die in dem Hauptrahmen und der Heckklappe angeordnet sind. Eine Ballenformkammer einschließlich der Schürze variiert in der Größe von einer Ballenstartposition zu einer vollen Ballenposition. Eine Abstreifereinrichtung ist vorgesehen, um zu verhindern, dass Schmutz in den Bereich zwischen den Bändern und einer oder mehreren der Walzen gelangt, wenn der Ballen in der Ballenformkammer gebildet wird.

Derartige Abstreifereinrichtungen funktionieren häufig, insbesondere bei schwierigen Erntebedingungen wie beispielsweise nassem Erntegut, nicht optimal.

Die der Erfindung zugrunde liegende Aufgabe wird darin gesehen, eine Presse mit einer Abstreifereinrichtung und ein Verfahren der eingangs genannten Art anzugeben, durch welche die vorgenannten Nachteile überwunden werden.

Die Aufgabe wird erfindungsgemäß durch die Lehre der Patentansprüche 1 bzw. 5 gelöst. Weitere vorteilhafte Ausgestaltungen und Weiterbildungen der Erfindung gehen aus den Unteransprüchen hervor.

Eine Rundballenpresse weist eine Abstreifereinrichtung zur Verminderung von Anhaftungen an einem beweglichen Bauteil der Presse, insbesondere einem mit einem Ballen zusammenwirkenden Pressmittel auf. Die Abstreifereinrichtung weist einen eine Kratzleiste tragenden Kratzleistenträger auf. Der Kratzleistenträger ist mit der Presse beweglich verbindbar vorgesehen und kann zumindest eine erste Stellung, in der die Kratzleiste wirksam an das Pressmittel angrenzt, und eine zweite Stellung einnehmen, in der die Kratzleiste von dem Pressmittel abgehoben ist. Es ist denkbar, dass der Kratzleistenträger verschiebbar oder anderweitig bewegbar vorgesehen ist. Vorzugsweise ist er aber schwenkbar mit der Presse verbindbar. Es ist vorgesehen, dass die Kratzleiste ihre abgehobene Stellung zyklisch einnimmt. Durch das regelmäßige, im Rahmen eines Zyklus erfolgende Abheben der Kratzleiste von dem Pressmittel, wird einer Anhäufung von insbesondere abgekratztem Material auf der Kratzleiste entgegengewirkt, da dieses beim Abheben oder im abgehobenen und damit von dem Pressmittel beabstandeten Zustand der Kratzleiste regelmäßig von dieser, wie auch von dem Kratzleistenträger bzw. der Abstreifereinrichtung als solches ab- bzw herabfallen kann. Auf diese Weise kann Verstopfungen und/oder Fehlfunktionen, wie sie insbesondere bei nassen Bedingungen und/oder feuchtem Press- bzw. Erntegut durch sich anhäufendes und verklumpendes Material auftreten können, vorgebeugt werden. Dies ist darüber hinaus auch ästhetisch vorteilhaft. Die Presse ist in der Art einer landwirtschaftlichen Rundballenpresse ausgebildet. Die Abstreifereinrichtung kann aber auch an anderen Pressen, beispielsweise an industriellen Pressen eingesetzt werden.

In vorteilhafter Weise ist das Pressmittel in der Art eines endlosen Pressmittels, insbesondere einem Pressriemen oder - gurt, ausgebildet und/oder weist wenigstens ein endloses Pressmittel, insbesondere einen Pressriemen bzw. -gurt auf. Es können aber auch eine Mehrzahl von oder gemäß der bevorzugten Ausführungsform zwei endlose Pressmittel vorgesehen sein. Das Pressmittel kann aber auch in der Art einer Rolle oder Walze oder in jeder anderen geeigneten Weise ausgebildet sein oder derartige aufweisen.

Es ist denkbar, dass der Zyklus von einer Steuer- oder Regeleinrichtung der Presse bestimmt wird. Vorzugsweise wird der Zyklus aber durch eine Baugruppe und insbesondere durch eine bereits einem zyklischen Ablauf folgende Baugruppe der Presse bestimmt. Auf diese Weise kann auf eine separate Steuer oder Regelung der Abstreifereinrichtung verzichtet werden, da der Zyklus bzw. der Ablauf bereits durch diese Baugruppe, deren Funktion bzw. deren Steuer- oder Regelung vorgeben wird. Auch kann der Zyklus bzw. die Funktion der Abstreifereinrichtung auf diese Weise mit einer oder mehreren Baugruppen der Presse synchronisiert werden, ohne dass hierzu aufwendige Maßnahmen ergriffen werden müssen. Besonders günstig ist es, wenn der Zyklus durch einen Spannmechanismus der Presse, insbesondere eine Spannmechanismus für das Pressmittel bestimmt wird.

Der Spannmechanismus kann wenigstens einen, vorzugsweise direkt oder indirekt verschwenk- bzw. verdrehbar mit der Presse verbindbaren und insbesondere mit einem Spannelement zusammenwirkenden Spannarm aufweisen. Derartige Spannarme folgen während der Ballenbildung oder nach Abschluss der Ballenbildung und/oder beim Auswerfen des Ballens aus einem Pressraum einem zumindest im Wesentlichen zyklischen Bewegungsablauf. Ist der Spannarm mit dem Kratzleistenträger wirksam verbunden, so kann der Kratzleistenträger einer Bewegung des Spannarms zumindest bereichsweise folgen. Auf diese Weise kann der zyklische Bewegungsablauf des Spannarms in einfacher Art und Weise an den Kratzleistenträger übertragen werden und/oder es kann in einfacher Weise ein zumindest teilweise synchronisiertes bzw. abhängiges Verschwenken realisiert werden.

Die mit einer oder mehreren der zuvor beschriebenen Abstreifereinrichtungen ausgestattete Rundballenpresse beugt Anhaftungen oder Ablagerungen an einem oder mehreren Pressmittel(n) in besonders günstiger Art und Weise vor. Die Abstreifereinrichtung oder auch eine oder mehrere der Abstreifereinrichtungen sind in einem einer Deichsel zugewandten Bereich des Ballenpressraums angeordnet. Diese Anordnung ist besonders günstig, da die Abstreifereinrichtung in diesem Bereich relativ geschützt vor äußeren Einwirkungen angebracht werden kann. Die Abstreifereinrichtung wirkt mit einer Außenseite, im gezeigten Ausführungsbeispiel einer dem Pressraum abgewandten bzw. einem Rahmen der Presse zugewandten Seite und/oder Fläche, des Pressmittels zusammen. Bei der Ballenpresse handelt es sich insbesondere um eine landwirtschaftliche Ballenpresse zur Bildung rundzylindrischer Ballen. Die Presse kann aber auch im industriellen Bereich, beispielsweise zur Bildung von Ballen aus Papier, Müll, Stoff oder anderen Materialien eingesetzt werden.

Besonders günstig ist es, wenn der Kratzleistenträger gemeinsam mit einem Gelenkhebel um eine Achse verschwenkbar an dem Rahmen vorgesehen ist. Der Gelenkhebel kann dabei über ein Verbindungsmittel mit dem Spannarm zusammenwirken. Weist das Verbindungsmittel wenigstens ein Verbindungselement und ein mit diesem zusammenwirkendes Federmittel auf, so können diese derart beispielsweise als eine Überlastsicherung wirken, dass sie im Falle einer beispielsweise durch einen Stein oder durch eine besonders große oder harte Anhaftung von Material verursachten Überlastung ein Wegschwenken der Kratzleiste erlauben, so dass einer Beschädigung der Abstreifereinrichtung vorgebeugt werden kann. Eine solche Einrichtung kann aber auch alternativ oder zusätzlich dazu dienen, ein Anliegen der Kratzleiste als solches als auch insbesondere unter Einhaltung und/oder Aufrechterhaltung einer vorgegebenen Spannung an dem Pressmittel zu gewährleisten. Auf diese Weise kann die Funktion der Abstreifereinrichtung weiter verbessert werden.

Es ist denkbar, die Kratzleiste aus einem starren Material und/oder auch einteilig mit dem Kratzleistenträger vorzusehen. Ist die Kratzleiste aber als separates und insbesondere mit dem Kratzleistenträger lösbar verbindbares Bauteil ausgebildet, so kann sie aus einem anderen Material als der Kratzleistenträger hergestellt werden und/oder im Falle von Verschleiß oder Beschädigung oder auch zur Anpassung an andere Erntebedingungen ausgetauscht werden. Auch ein Nachstellen der Position der Kratzleiste bezogen auf den Kratzleistenträger ist auf diese Art und Weise möglich. Besonders günstig ist es, wenn die Kratzleiste zumindest bereichsweise flexibel, vorzugsweise aber in der Art einer Hartgummileiste oder -lippe ausgebildet ist.

Besonders günstig ist es, wenn der Spannmechanismus zumindest unter anderem vorgesehen ist, um beim Öffnen des Ballenpressraums und/oder beim Auswerfen des Ballens eine gegebenenfalls vorgebbare Spannung des Pressmittels aufrechtzuerhalten und/oder auftretenden Schlupf aufzunehmen. Es ist aber auch denkbar, dass der Spannmechanismus das Pressmittel während der Ballenbildung oder anderweitig mit Spannung beaufschlagt.

Gemäß einem Verfahren zum Betrieb einer zuvor beschriebenen Presse kann die Abstreifereinrichtung während der Bildung eines Ballens in dem Ballenpressraum derart mit dem Pressmittel zusammenwirken, dass vorzugsweise an der Außenseite des Pressmittel angelagerte Ablagerungen durch die Abstreifereinrichtung bzw. die Kratzleiste von dem Pressmittel bzw. dessen Außenseite zumindest teilweise entfernt wird/werden kann. Während eines Öffnens des Pressraums zum Auswerfen eines Ballens bzw. dem Auswerfen eines Ballens wirkt die Abstreifereinrichtung nicht (länger) mit dem Pressmittel zusammen bzw. die Kratzleiste wird in eine von dem Pressmittel bzw. dessen Außenseite abgehobene bzw. beabstandete Stellung gebracht, insbesondere in der Art, dass zuvor abgestreifte Ablagerungen von der Abstreifereinrichtung bzw. der Kratzleiste herabfallen können.

Ist die Abstreifereinrichtung wirksam mit einem Spannmechanismus verbunden, der insbesondere beim Öffnen des Ballenpressraums und/oder beim Auswerfen eines Ballens aus dem Ballenpressraum eine gegebenenfalls vorgebbare Spannung des Pressmittels gewährleistet und/oder gegebenenfalls auftretenden Schlupf aufnimmt, so kann die Abstreifereinrichtung bzw. eines oder mehrere ihrer Bauteile in einfacher Weise der zyklischen Arbeitsweise dieses Spannmechanismus folgen. Es darüber hinaus denkbar, dass die Spanneinrichtung eine/mehrere alternative und/oder zusätzliche Funktionalität(en) aufweist.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Presse in Seitenansicht mit einer Abstreifereinrichtung,
- Fig. 2a: die Abstreifereinrichtung aus Figur 1 in einer vergrößerten Darstellung in einer ersten Stellung und
- Fig. 2b: die Abstreifereinrichtung aus Figur 1 in einer vergrößerten Darstellung in einer zweiten Stellung.

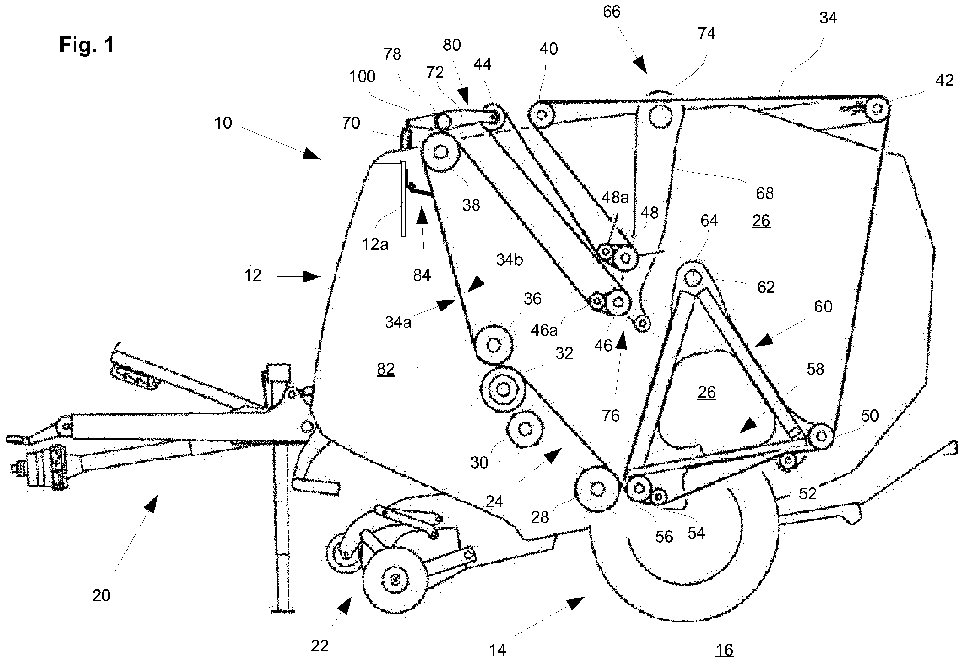

In der Fig. 1 ist eine Ausführungsform einer Presse 10 dargestellt, die einen Rahmen 12 aufweist, der sich über ein Fahrwerk 14 auf dem Untergrund 16 abstützt. Die gezeigte Presse 10 ist in der Art einer Rundballenpresse ausgebildet und kann sowohl im landwirtschaftlichen als auch im industriellen Bereich zur Herstellung eines üblicherweise als Rundballen bezeichneten, insbesondere rundzylindrischen Ballens aus Erntegut, aber auch aus Müll, Papier, Stoff bzw. Gewebe, Baumwolle, Tabak etc. eingesetzt werden. Eine solche Presse 10 kann von einem nicht gezeigten Arbeitsfahrzeug, vorzugsweise in der Art eines Ackerschleppers, gezogen werden oder auch selbstfahrend ausgebildet sein.

Gemäß dem vorliegenden Ausführungsbeispiel ist an der Vorderseite des Rahmens 12 eine Deichsel 20 vorgesehen, um die Presse 10 an einem nicht gezeigten Ackerschlepper anhängen und über ein Feld ziehen zu können. Eine Aufnahmevorrichtung 22 in Form einer Pick-Up dient zur Aufnahme von auf dem Untergrund 16 liegenden Erntegut, z. B. von in einem Schwad abgelegten Heu oder Stroh. Das von der Aufnahmevorrichtung 22 aufgenommene Erntegut wird einem Einlass 24 einem Ballenpressraums 26 zugeführt und dort spiralförmig zu einem rundzylindrischen Ballen aufgerollt, gebunden und anschließend auf dem Untergrund 16 abgelegt.

Am Einlass 24 des Ballenpressraums 26 sind eine untere, stationäre Rolle 28 und zwei obere Rollen 30, 32 positioniert. Der Ballenpressraum 26 wird weiterhin durch ein endloses Pressmittel 34 gebildet, das gemäß der vorliegenden Ausführungsform in der Art zweier nebeneinander anliegender Pressriemen ausgeführt ist und um eine Anzahl von ortsfesten Walzen 36, 38, 40, 42 und bewegbaren Walzen 44 , 46, 48, 50, 52, 54, 56 geführt wird. Das Pressmittel 34 weist eine dem Rahmen 12 zugewandte Außenseite 34a und eine Innenseite 34b auf.

Während der Ballenpressraum 26 umfangsseitig im Wesentlichen von dem Pressmittel 34 und den Rollen 28, 30 und 32 umgeben wird, wird er seitlich von nicht gezeigten Seitenwänden begrenzt.

Vier Walzen 50, 52, 54, 56 der bewegbaren Walzen 44 - 56 sind in einem unteren Bereich 58 eines deltaförmigen Trägers 60 frei drehbar gelagert, der um seine obere Spitze 62 um eine horizontal und quer zur Vorwärtsrichtung verlaufende Achse 64 schwenkbar angelenkt ist und mit einem Aktor (nicht gezeigt) aus der in Fig. 1 dargestellten Ballenbildungsposition in eine nach hinten und oben verschwenkte Ballenauswurfposition verbringbar ist.

Ein Spannmechanismus 66 zur Straffung des Pressmittels 34 weist einen Spannhebel 68, der mit einem nicht gezeigten ersten Spannelement zusammenwirkt, und einen mit einem zweiten Spannelement 70 zusammenwirkenden Spannarm 72 auf. Sowohl das nicht gezeigte Spannelement als auch das Spannelement 72 kann in üblicher Weise als eine mechanische Feder oder als ein Hydraulikmotor ausgebildet sein und/oder einen solchen aufweisen.

Der Spannhebel 68 ist im Bereich der nicht gezeigten Seitenwände um eine horizontal und quer zur Vorwärtsrichtung verlaufende Achse 74 gelagert und trägt in einem der Achse 74 abgewandten Endbereich 76 zwei der bewegbaren Rollen 46, 48 sowie diesen Rollen 46, 48 zugeordnete Reinigungsrollen 46a, 48a. Der Spannarm 72 ist entsprechend um eine Achse 78 gelagert und trägt in einem Endbereich 80 eine der bewegbaren Rollen 44. Darüber hinaus ist der Spannarm 68 mit dem Spannelement 70 einenends wirksam verbunden, das andernends mit der Presse bzw. deren Rahmen 12 in nicht gezeigter Weise verbunden ist.

Das Pressmittel 34 wird mittels des Spannarms 72 stets so fest an die drehend angetriebene, ortsfeste Walze 38 angelegt, dass seine Mitnahme gewährleistet ist. Auch die Walze 36 wird drehend angetrieben. Das Pressmittel 34 nimmt einen Anfangszustand ein, in dem es gerade gestreckt den Einlass 24 überbrückt, und einen Endzustand, in dem es sich wie eine große Schlaufe um einen Ballen schlingt. Der Ballenpressraum 26 ist somit in seiner Größe veränderlich, d. h. sein Durchmesser nimmt mit der Größe des Ballens 18 zu. Der Ballen befindet sich während seiner Bildung in dem Ballenpressraum 26 und wird von dem Pressmittel 34 größtenteils umschlungen, fällt aber aus dem Ballenpressraum 26 nach hinten auf den Untergrund 16, sobald der Träger 60 mit den beweglichen Walzen 50 - 56 mit Blick auf die Zeichnung entgegen dem Uhrzeigerdrehsinn nach oben schwenkt. Alternativ kann der Ballen auch auf einem der Presse 10 nachgeordneten Gerät, beispielsweise in der Art eines Geräts zur Umhüllung des Ballens mit einem Netz- oder Folienmaterial abgelegt werden.

Die dargestellte Ausführungsform der Ballenpresse ist in der EP 1 308 078 A1 detailliert offenbart. Andere, mögliche Ausführungsformen sind in der DE 198 51 470 A1, DE 102 41 215 A1 und der EP 1 264 531 A1 beschrieben. In einem der Deichsel 20 zugewandten Bereich 82 der Ballenpresse 10 ist eine Abstreifereinrichtung 84 vorgesehen, um Ablagerungen oder Anhaftungen an dem Pressmittel 34 bzw. dem Außenbereich des Pressmittels 34a beispielsweise in der Art von insbesondere feuchtem bzw. nassem Erntegut, beispielsweise Gras, Schmutz oder anderem Material, von dem dem Pressmittel 34 bzw. dessen Außenbereich 34a abzukratzen bzw. abzustreifen. Die Abstreifereinrichtung 84 weist einen Kratzleistenträger 86 und eine Kratzleiste 88 auf. Der Kratzleistenträger 86 ist über ein Gelenk 90 schwenkbar mit einem Rahmenbereich 12a der Presse 10 verbunden und trägt andernends die gemäß dem vorliegenden Ausführungsbeispiel aus einem flexiblen Kunststoffmaterial bestehende Kratzleiste 88, die beispielsweise in der Art einer Hartgummileiste oder - lippe ausgebildet sein kann

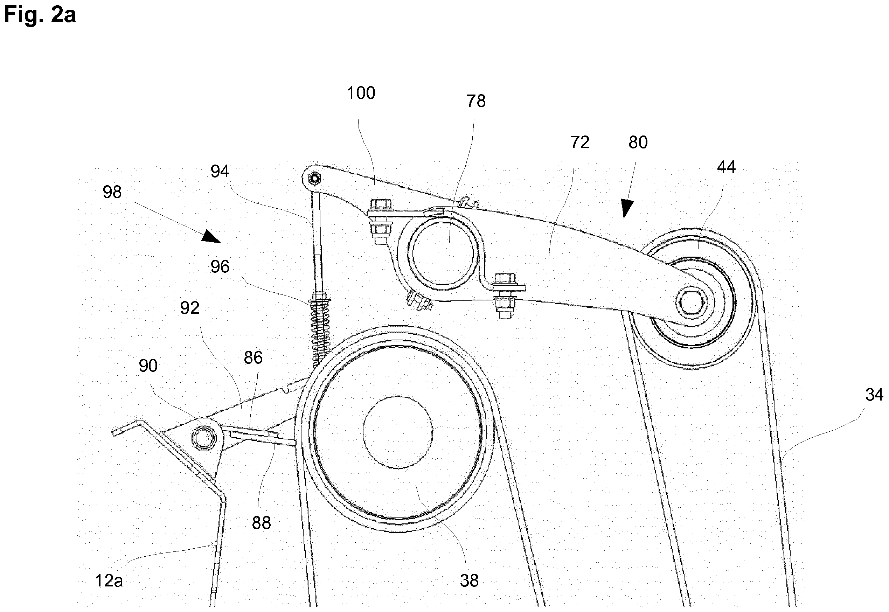

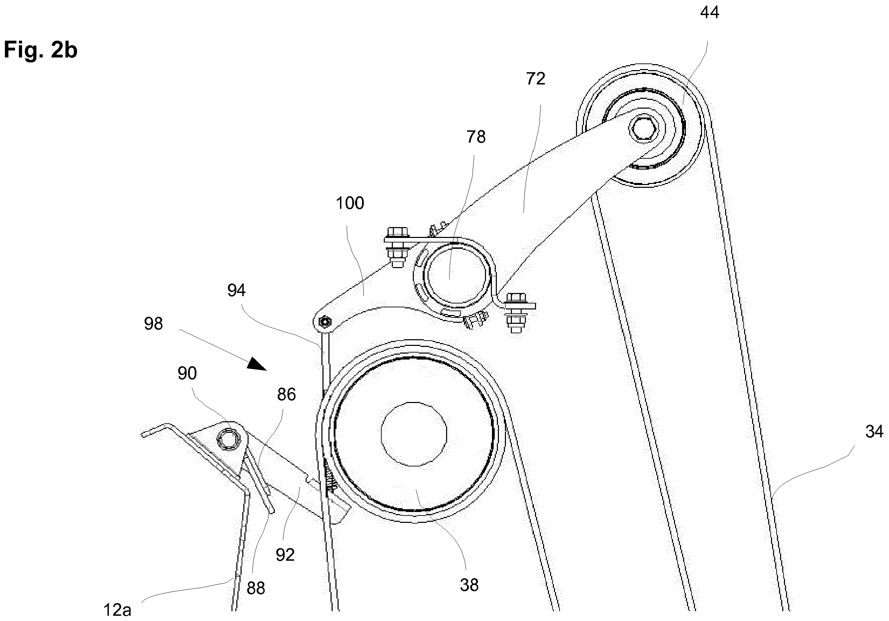

Es wird nun auch auf die Figuren 2a und 2b Bezug genommen, in denen die Abstreifereinrichtung 84 genauer dargestellt wird. Der Kratzleistenträger 86 ist über das Gelenk 90 mit einem Bereich 12a des Rahmens 12 gemeinsam mit einem Gelenkhebel 92 schwenkbar verbunden. Der Gelenkhebel 92 wiederum ist über ein ein Verbindungselement 94 und ein Federmittel 96 aufweisendes Verbindungsmittel 98 mit einem Spannarmhebel 100 verbunden, der mit dem Spannarm 72 um die gleiche Achse 78 derart schwenkbar gelagert ist, dass er mit diesem gegebenenfalls gemeinsam verschwenken kann.

Im Folgenden soll nun auf die Funktionsweise der Abstreifereinrichtung 84 genauer eingegangen werden. Hierzu wird auf die Figur 1 sowie auf die Figuren 2a und 2b Bezug genommen.

Der Spannarm 72 nimmt während des Ballenbildungsvorgangs die in Figur 2a gezeigte und bezogen auf die den Pressraum 12 nach rechts unten verschwenkte Stellung ein. Nach Beendigung des Ballenbildungsvorgangs und einer eventuell an diesen angeschlossenen Bindung oder einer Umhüllung mit Netz- oder Folienmaterial wird ein deltaförmiger Träger 60 nach rückwärts und oben verschwenkt. Die an dem Träger 60 vorgesehenen Walzen 50 und 56 nehmen das Pressmittel 34 mit in eine ebensolche Position, wodurch der im Pressraum 26 bisher von dem Pressmittel 34 umschlungene Ballen von dem Pressmittel 34 freigegeben, aus dem Pressraum 26 abgegeben und auf dem Untergrund 16 oder einem angeschlossenen Gerät, beispielsweise einem Gerät zur Umhüllung des Ballens mit einem Netz- oder Folienmaterial, abgelegt wird.

Schwenkt der deltaförmige Träger 60 und somit die an ihm angebrachten Walzen 50, 56 und das Pressmittel 34 nach rückwärts und oben, so beginnt sich der Spannhebel 68 zurück in Richtung seiner unteren, in Figur 1 gezeigten Position zu bewegen. Kurzfristig wird die Spannung des Pressmittels 34 nun durch eine Bewegung des Spannarms 72 nach oben aufrechterhalten. Möglicherweise auftretender Schlupf kann so aufgenommen und/oder diesem vorgebeugt werden. Der Spannarm 72 verschwenkt um die Achse 78 kurzfristig nach oben, wodurch der Schwenkarmhebel 100 nach unten verschwenkt. Diese nach unten gerichtete Bewegung wird über das Verbindungsmittel 98 an den Gelenkhebel 92 übertragen, welcher den Kratzleistenträger 86 und somit die Kratzleiste 88 nach unten in die in Figur 2b dargestellte, abgehobene bzw. dem Pressmittel 34 bzw. dem Außenbereich 34a des Pressmittels 34 abgelegene Stellung bringt. In dieser Stellung kann möglicherweise auf der Abstreifereinrichtung 84 bzw. dem Kratzleistenträger 86 und/oder der Kratzleiste 88 abgelagertes Material von diesem herabfallen. Im Anschluss verschwenkt der Spannarm 72 durch die Wirkung des Spannmittels 70 wieder in Richtung seiner an den Außenbereich 34a des Pressmittels 34 angrenzenden, in Figur 2a gezeigten Stellung. Das Federmittel 96 kann in dieser Stellung sicherstellen, dass die Kratzleiste 88 an dem Außenbereich 34a des Pressmittels 34 gleichmäßig anliegt und/oder ein Ausweichen des Kratzleiste 88, des Kratzleistenträges 86 bzw. des Gelenkhebels 92 in Falle einer Überbelastung, erzeugt durch beispielsweise einen in diesem Bereich gelangten Stein, hochverdichtete Ablagerungen oder ähnlichem, erlauben. Auf diese Weise kann einer Beschädigung der Abstreifereinrichtung 84 vorgebeugt und/oder eine optimale Funktion gewährleistet werden.

## Patentansprüche

1. Rundballenpresse (10), insbesondere landwirtschaftliche Rundballenpresse zur Bildung rundzylindrischer Ballen, mit einem Pressmittel (34) in der Art eines endlosen Pressmittels, insbesondere eines Pressriemens oder -gurts und einer Abstreifereinrichtung (84) zur Verminderung von Anhaftungen an einem mit einem Ballen zusammenwirkenden Pressmittel (34), wobei die Abstreifereinrichtung (84) einen eine Kratzleiste (88) tragenden Kratzleistenträger (86) umfasst,
wobei der Kratzleistenträger (86) mit der Rundballenpresse (10) verschwenkbar verbunden ist,
wobei mit dem Kratzleistenträger (86) zumindest eine erste Stellung, in der die Kratzleiste (88) wirksam an dem Pressmittel (34) angrenzt, und eine zweite Stellung einnehmbar ist, in der die Kratzleiste (88) von dem Pressmittel (34) abgehoben ist,
wobei die Kratzleiste (88) die zweite, abgehobene Stellung zyklisch einnimmt und der Zyklus von einem Spannmechanismus (66) für das Pressmittel (34) bestimmt wird,
wobei der Spannmechanismus (66) wenigstens einen, vorzugsweise direkt oder indirekt verschwenk- bzw. verdrehbar mit der Rundballenpresse (10) verbundenen und insbesondere mit einem Spannelement (70) zusammenwirkenden Spannarm (72) aufweist,
wobei der Spannarm (72) mit dem Kratzleistenträger (86) derart wirksam verbunden ist, dass der Kratzleistenträger (86) der Bewegung des Spannarms (72) zumindest bereichsweise folgt, **dadurch gekennzeichnet,**
**dass** die Abstreifereinrichtung (84) in einem einer Deichsel (20) zugewandten Bereich (82) eines Ballenpressraums (26) der Rundballenpresse (10) angeordnet ist und mit einer Außenseite (34a) des Pressmittels (34) zusammenwirken kann.

2. Rundballenpresse (10) nach Anspruch 1, **dadurch gekennzeichnet, dass** der Kratzleistenträger (86) gemeinsam mit einem Gelenkhebel (92) um eine Achse (90) verschwenkbar vorgesehen ist und der Gelenkhebel (92) über ein Verbindungsmittel (98) mit dem Spannarm (72) zusammenwirkt, wobei das Verbindungsmittel (98) ein Verbindungselement (94) und ein mit diesem zusammenwirkendes Federmittel (96) aufweist.

3. Rundballenpresse (10) nach einem der vorherigen Ansprüche, **dadurch gekennzeichnet, dass** die Kratzleiste (88) zumindest bereichsweise flexibel, vorzugsweise aber in der Art einer Hartgummileiste oder -lippe ausgebildet ist.

4. Rundballenpresse (10) nach einem der vorherigen Ansprüche, **dadurch gekennzeichnet, dass** der Spannmechanismus (66) zumindest unter anderem vorgesehen ist, um beim Öffnen eines Ballenpressraums (26) und/oder beim Auswerfen eines Rundballens eine gegebenenfalls vorgebbare Spannung für das Pressmittel (34) aufrechtzuerhalten.

5. Verfahren zum Betrieb einer Rundballenpresse (10) nach einem der Ansprüche 1 bis 4, wobei die Abstreifereinrichtung (84) während der Bildung eines Ballens dem Ballenpressraum (26) derart mit dem Pressmittel (34) zusammenwirkt,
dass an der Außenseite (34a) des Pressmittels (34) angelagerte Ablagerungen durch die Abstreifereinrichtung (84) von dem Pressmittel (34) bzw. dessen Außenseite (34) zumindest teilweise entfernt werden und insbesondere während des Öffnens
des Ballenpressraums (26) zum Auswerfen eines Ballens bzw. des Auswerfens eines Ballens nicht mit dem Pressmittel (34) zusammenwirkt bzw. die Kratzleiste (88) eine von dem Pressmittel (34) bzw. dessen Außenseite (34a) abgehobene Stellung gebracht wird, insbesondere in der Art, dass zuvor abgestreifte Ablagerungen von der Abstreifereinrichtung (84) bzw. der Kratzleiste (88) herabfallen können.

6. Verfahren nach Anspruch 5, **dadurch gekennzeichnet, dass** die Abstreifereinrichtung (84) wirksam mit einem Spannmechanismus (66) verbunden ist, der insbesondere beim Öffnen des Ballenpressraums (26) und/oder beim Auswerfen eines Ballens aus dem Ballenpressraum (26) eine gegebenenfalls vorgebbare Spannung des Pressmittels (34) gewährleistet und/oder gegebenenfalls auftretenden Schlupf aufnimmt.

## Claims

1. Round baler (10), in particular agricultural round baler for forming round cylindrical bales, having a pressing means (34) of the endless pressing means type, in particular a baler belt, and a stripper device (84) for reducing adhesions to a pressing means (34) interacting with a bale, wherein the stripper device (84) comprises a scraping strip carrier (86) carrying a scraping strip (88),
wherein the scraping strip carrier (86) is connected in a pivotable manner to the round baler (10),
wherein, with the scraping strip carrier (86), at least a first position, in which the scraping strip (88) actively adjoins the pressing means (34), and a second position, in which the scraping strip (88) has been lifted off the pressing means (34), are able to be taken up,
wherein the scraping strip (88) takes up the second, lifted position cyclically and the cycle is determined by a tensioning mechanism (66) for the pressing means (34),
wherein the tensioning mechanism (66) has at least one tensioning arm (72) that is connected preferably directly or indirectly in a pivotable or rotatable manner to the round baler (10) and interacts in particular with a tensioning element (70),
wherein the tensioning arm (72) is actively connected to the scraping strip carrier (86) such that the scraping strip carrier (86) at least regionally follows the movement of the tensioning arm (72), **characterized**
**in that** the stripper device (84) is arranged in a region (82), facing a drawbar (20), of a baling chamber (26) of the round baler (10) and can interact with an outer side (34a) of the pressing means (34).

2. Round baler (10) according to Claim 1, **characterized in that** the scraping strip carrier (86) is provided to be pivotable together with an articulated lever (92) about an axis (90), and the articulated lever (92) interacts with the tensioning arm (72) via a connecting means (98), wherein the connecting means (98) has a connecting element (94) and a spring means (96) interacting therewith.

3. Round baler (10) according to either of the preceding claims, **characterized in that** the scraping strip (88) is formed at least regionally in a flexible manner, but preferably in the manner of a hard rubber strip or lip.

4. Round baler (10) according to one of the preceding claims, **characterized in that** the tensioning mechanism (66) is provided at least inter alia to maintain an optionally predefinable tension for the pressing means (34) when a baling chamber (26) is opened and/or when a round bale is ejected.

5. Method for operating a round baler (10) according to one of Claims 1 to 4, wherein, during the formation of a bale in the baling chamber (26), the stripper device (84) interacts with the pressing means (34) such that deposits that have accrued on the outer side (34a) of the pressing means (34) are at least partially removed from the pressing means (34), or the outer side (34) thereof, by the stripper device (84), and, in particular when the baling chamber (26) is opened for ejecting a bale or when a bale is being ejected, does not interact with the pressing means (34) or the scraping strip (88) is moved into a position lifted off the pressing means (34), or the outer side (34a) thereof, in particular in such a way that deposits that have been stripped off beforehand can fall off the stripper device (84) or the scraping strip (88).

6. Method according to Claim 5, **characterized in that** the stripper device (84) is connected actively to a tensioning mechanism (66), which, in particular when the baling chamber (26) is opened and/or when a bale is ejected from the baling chamber (26), ensures an optionally predefinable tension in the pressing means (34) and/or takes up any slip that may occur.

## Revendications

1. Presse à balles rondes (10), notamment presse à balles rondes agricole pour la formation de balles cylindriques rondes, comprenant un moyen de pressage (34) du type d'un moyen de pressage sans fin, notamment d'une courroie ou sangle de pressage, et un dispositif de raclage (84) pour la réduction de dépôts sur un moyen de pressage (34) coopérant avec une balle, le dispositif de raclage (84) comprenant un support de barre de grattage (86) supportant une barre de grattage (88),
le support de barre de grattage (86) étant raccordé de manière pivotante avec la presse à balles rondes (10),
avec le support de barre de grattage (86), au moins une première position, dans laquelle la barre de grattage (88) est activement accolée au moyen de pressage (34), et une deuxième position, dans laquelle la barre de grattage (88) est décollée du moyen de pressage (34), pouvant être adoptées,
la barre de grattage (88) adoptant cycliquement la deuxième position décollée et le cycle étant déterminé par un mécanisme de tension (66) pour le moyen de pressage (34),
le mécanisme de tension (66) comprenant au moins un bras de tension (72), de préférence raccordé directement ou indirectement de manière pivotante ou rotative avec la presse à balles rondes (10) et notamment coopérant avec un élément de tension (70),
le bras de tension (72) étant raccordé activement avec le support de barre de grattage (86), de telle sorte que le support de barre de grattage (86) suive au moins en zones le mouvement du bras de tension (72), **caractérisée en ce que**
le dispositif de raclage (84) est agencé dans une zone (82), tournée vers une barre de traction (20), d'une chambre de pressage de balles (26) de la presse à balles rondes (10) et peut coopérer avec un côté extérieur (34a) du moyen de pressage (34).

2. Presse à balles rondes (10) selon la revendication 1, **caractérisée en ce que** le support de barre de grattage (86) est prévu sous forme pivotante autour d'un axe (90) conjointement avec un levier d'articulation (92) et le levier d'articulation (92) coopère avec le bras de tension (72) par l'intermédiaire d'un moyen de raccordement (98), le moyen de raccordement (98) comprenant un élément de raccordement (94) et un moyen de suspension (96) coopérant avec celui-ci.

3. Presse à balles rondes (10) selon l'une quelconque des revendications précédentes, **caractérisée en ce que** la barre de grattage (88) est configurée au moins en zones sous forme flexible, de préférence toutefois sous la forme d'une barre ou lèvre en caoutchouc dur.

4. Presse à balles rondes (10) selon l'une quelconque des revendications précédentes, **caractérisée en ce que** le mécanisme de tension (66) est prévu au moins entre autres pour, lors de l'ouverture d'une chambre de pressage de balles (26) et/ou lors de l'éjection d'une balle ronde, maintenir une tension éventuellement prédéterminable pour le moyen de pressage (34).

5. Procédé d'exploitation d'une presse à balles rondes (10) selon l'une quelconque des revendications 1 à 4, dans lequel le dispositif de raclage (84) coopère avec le moyen de pressage (34) pendant la formation d'une balle dans la chambre de pressage de balles (26) de telle sorte que des dépôts déposés sur le côté extérieur (34a) du moyen de pressage (34) soient au moins partiellement éliminés du moyen de pressage (34) ou de son côté extérieur (34) par le dispositif de raclage (84) et, notamment pendant l'ouverture de la chambre de pressage de balles (26) pour l'éjection d'une balle ou pendant l'éjection d'une balle, ne coopère pas avec le moyen de pressage (34) ou la barre de grattage (88) est amenée à une position décollée du moyen de pressage (34) ou de son côté extérieur (34a), notamment de telle sorte que des dépôts auparavant raclés puissent tomber du dispositif de raclage (84) ou de la barre de grattage (88).

6. Procédé selon la revendication 5, **caractérisé en ce que** le dispositif de raclage (84) est raccordé activement avec un mécanisme de tension (66) qui, notamment lors de l'ouverture de la chambre de pressage de balles (26) et/ou lors de l'éjection d'une balle hors de la chambre de pressage de balles (26), assure une tension éventuellement prédéterminable du moyen de pressage (34) et/ou absorbe un glissement qui se produit éventuellement.
